# FASCICULE DE BREVET EUROPEEN

(11) **EP 2 437 969 B1**
(45) Date de publication et mention de la délivrance du brevet: **10.07.2013**
(21) Numéro de dépôt: 10727089.4
(22) Date de dépôt: 03.05.2010
(51) Int. Cl.: B62D 25/06

(54) **TRAVERSE AVANT DE PAVILLON POUR VEHICULE AUTOMOBILE ET VEHICULE COMPORTANT UNE TELLE TRAVERSE**
FRONT QUERTRÄGER FÜR EIN DACH EINES KRAFTFAHZEUGES, UND FAHRZEUG MIT EINEM SOLCHEN QUERTRÄGER
FRONT CROSSMEMBER FOR A ROOF FOR AN AUTOMOBILE, AND VEHICLE COMPRISING SUCH A CROSSMEMBER

(30) Priorité: 04.06.2009 FR 0953695
(43) Date de publication de la demande: 11.04.2012
(73) Titulaire: PEUGEOT CITROËN AUTOMOBILES S.A., 78140 Vélizy Villacoublay (FR)
(72) Inventeur: BOUCHY, Laurent, F-91590 Baulne (FR)
(74) Mandataire: Fosse, Danièle
(86) Numéro de dépôt international: PCT/FR2010/050844
(87) Numéro de publication internationale: WO 2010/139872

(56) Documents cités:
- EP-A- 1 721 769
- FR-A- 2 632 923
- FR-A- 2 900 624

## Description

La présente invention concerne une traverse avant de la caisse d'un véhicule automobile destinée à supporter l'avant du pavillon du véhicule.

Une traverse avant de ce type a été décrite par exemple dans le document FR 2 900 624.

Dans de nombreux véhicules, la face intérieure de la traverse ci-dessus supporte d'une part, une console comportant des composants électriques, tels que lampes d'éclairage, interrupteurs, conducteurs électriques, etc... et d'autre part, la garniture intérieure du pavillon.

Dans les véhicules modernes la console ci-dessus contient un conducteur électrique qui est relié à un boîtier fixé sur la face intérieure du pare-brise qui renferme des capteurs de pluie et de luminosité pour commander les essuie-glaces et l'allumage automatique des projecteurs.

Pour intégrer un écran de vision des témoins de non bouclage des ceintures de sécurité avant et arrière (TNB) dans la console avant de pavillon afin d'être visible par tous les occupants du véhicule, il est nécessaire d'allonger la console de manière importante vers l'avant du véhicule.

La console ne peut en effet pas être allongée vers l'arrière, car cela gênerait la position de la tête des occupants des sièges avant du véhicule, qui est définie par une sphère appelée « sphère tête du mannequin ».

Dans ce but, il a été proposé de souder au bord longitudinal avant de la traverse, une plaque formant pontet permettant de supporter la partie avant de la console.

Cependant, cette opération engendre des coûts importants d'outillage et de main d'oeuvre et des défauts de géométrie dus aux tolérances.

Le but de présente invention est de remédier à cet inconvénient.

Ce but est atteint selon l'invention grâce à une traverse avant de la caisse d'un véhicule automobile destinée à supporter l'avant du pavillon du véhicule et dont la face intérieure comporte des moyens de fixation pour fixer sous cette face une console contenant des composants électriques, caractérisée en ce que l'un au moins des bords longitudinaux de la traverse comporte une excroissance réalisée d'une seule pièce avec le reste de la traverse, cette excroissance comportant au moins une partie des moyens de fixation de la console.

Cette excroissance réalisée d'une seule pièce avec la traverse permet de réduire les coûts d'outillage et de main d'oeuvre et de supprimer les défauts de géométrie précités, tout en permettant d'augmenter la surface de fixation pour la console.

De préférence, ladite au moins une partie des moyens de fixation est constituée par au moins un trou de fixation réalisé sur la face intérieure de ladite excroissance.

Dans une version préférée de l'invention, ladite excroissance est située sur le bord longitudinal avant de la traverse.

Cette disposition permet de déplacer la console vers l'avant, ce qui est avantageux pour les raisons expliquées plus haut.

De préférence également, la traverse avant comporte une seconde excroissance réalisée sur l'autre bord longitudinal de la traverse.

Cette seconde excroissance permet d'élargir encore davantage la traverse et donc permet de fixer sous la traverse une console relativement longue sans porte à faux ni vers l'avant, ni vers l'arrière par rapport à la traverse.

Avantageusement, la seconde excroissance comporte sur sa face intérieure au moins un trou pour fixer ladite console.

De préférence, les deux excroissances sont situées sensiblement au milieu de la traverse.

De préférence également, la face intérieure des deux excroissances est située dans le prolongement de la face intérieure du reste de la traverse.

Selon une autre particularité de l'invention, chacun des deux bords longitudinaux de la traverse porte un rebord plié sensiblement perpendiculaire à la face intérieure de la traverse, ce rebord comportant lui-même une bordure pliée vers l'extérieur destinée à être fixée au pavillon, ce rebord et cette bordure s'étendant sans discontinuité sur le bord extérieur de chacune des excroissances.

Cette particularité confère à la traverse une excellente rigidité et permet de souder la traverse au pavillon par des points de soudure répartis régulièrement le long des bords longitudinaux de la traverse, y compris sur la partie de la bordure qui s'étend sur les excroissances.

Selon une autre disposition avantageuse, la traverse comprend au moins un bossage situé dans la zone de l'excroissance réalisée sur le bord longitudinal avant de la traverse, le sommet de ce bossage étant situé dans le prolongement de ladite bordure pliée.

Le sommet de ce bossage peut ainsi être fixé au pavillon par un point de soudure.

Selon un autre aspect, l'invention concerne également un véhicule automobile dont la caisse comporte une traverse avant selon l'invention, une console contenant des composants électriques étant fixée sous cette traverse avant au moins partiellement à l'excroissance réalisée sur l'un des bords longitudinaux de la traverse.

D'autres particularités et avantages de l'invention apparaîtront encore tout au long de la description ci-après.

Aux dessins annexés, donnés à titre d'exemples, non limitatifs :
- la figure 1 est une vue en perspective montrant la face intérieure d'une traverse avant selon l'invention,
- la figure 2 est une vue schématique en coupe suivant le plan II-II de la figure 1, la traverse étant fixée sous le pavillon d'un véhicule automobile et une console étant fixée sous cette traverse.

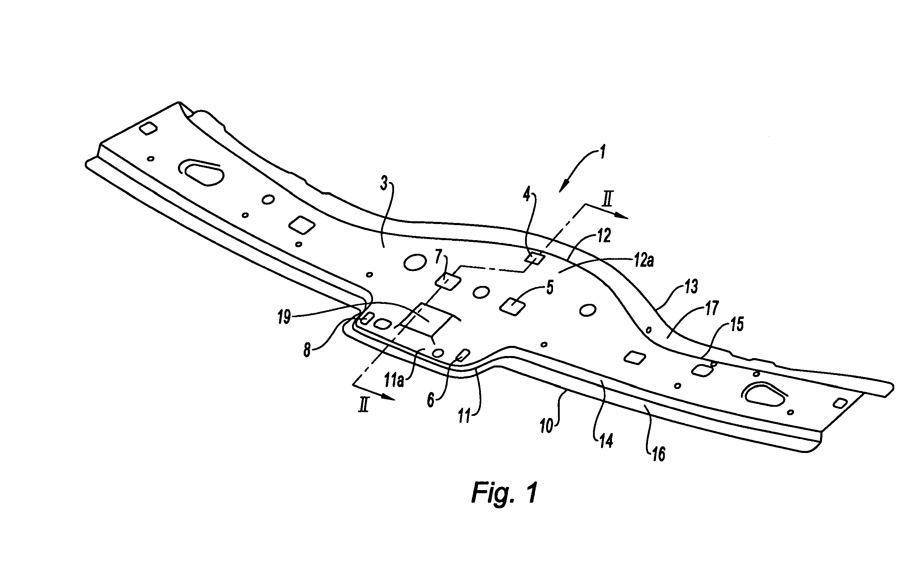

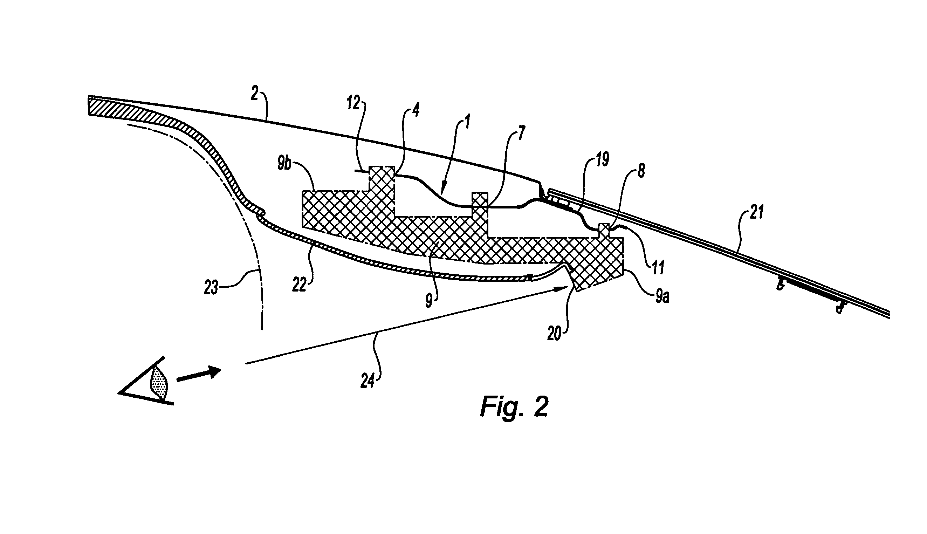

La figure 1 représente une traverse avant 1 en tôle emboutie de la caisse d'un véhicule automobile destinée à supporter l'avant du pavillon 2 du véhicule, comme indiqué sur la figure 2.

La face intérieure 3 de cette traverse 1 comporte des trous de fixation 4, 5, 6, 7, 8 pour fixer sous cette face 3 (voir figure 2) une console 9 contenant des composants électriques.

Le bord longitudinal avant 10 de la traverse 1 comporte une excroissance 11 réalisée d'une seule pièce avec le reste de la traverse.

Cette excroissance 11 comporte des trous de fixation 6, 8 pour fixer la partie avant de la console 9 contre la face intérieure 3 de la traverse, au moyen de vis ou analogue.

Dans l'exemple représenté sur la figure 1, la traverse 1 comporte une seconde excroissance 12 réalisée sur le bord longitudinal arrière 13 de la traverse.

Cette seconde excroissance 12 comporte sur sa face intérieure 12a un trou 4 pour fixer la partie arrière de la console 9.

D'autres trous 5, 7 situés dans la zone centrale de la traverse 1 servent à fixer la partie centrale de la console 9.

Les deux excroissances 11, 12 sont situées sensiblement au milieu de la traverse 1.

Par ailleurs, la face intérieure 11 a, 12a des deux excroissances 11 et 12 est située dans le prolongement de la face intérieure 3 du reste de la traverse.

Les trous 4, 5, 6, 7, 8 sont réalisés dans des parties embouties, comme montré par la figure 2.

Les figures 1 et 2 montrent en outre que chacun des deux bords longitudinaux 10, 13 de la traverse 1 porte un rebord 14, 15 plié sensiblement perpendiculaire à la face intérieure 3 de la traverse 1.

Ce rebord 14, 15 comporte lui-même une bordure 16, 17 pliée sensiblement à 90° vers l'extérieur destinée à être fixée au pavillon 2 par des points de soudure.

Les rebords 14, 15 et les bordures 16, 17 s'étendent sans discontinuité sur le bord extérieur de chacune des excroissances 11, 12.

Les figures 1 et 2 montrent par ailleurs que la traverse comprend un bossage 19 situé dans la zone de l'excroissance 11 réalisée sur le bord longitudinal avant 10 de la traverse.

Le sommet de ce bossage 19 est situé dans le prolongement de la surface des bordures 16, 17 c'est-à-dire de la surface de jonction de la traverse 1 avec le pavillon 2, comme montré sur la figure 2.

Le sommet 19a du bossage 19 embouti sur la tôle de la traverse peut ainsi être soudé par point au pavillon 2.

Les rebords 14, 15 et bordures 16, 17 confèrent à la traverse 1 une excellente rigidité du fait qu'ils s'étendent sans discontinuité sur les excroissances 11, 12.

Le bossage 19 permet de souder la traverse au pavillon 2 en un point situé entre les deux bords latéraux de l'excroissance 11, ce qui permet de créer une liaison solide et continue entre la traverse et le pavillon.

Par ailleurs, la figure 2 montre que la présence des deux excroissances 11, 12 de part et d'autre de la traverse permet de fixer sous cette dernière, une console 9 relativement longue dont l'extrémité avant 9a s'étend sous le pare-brise 21.

L'extrémité arrière 9b de la console 9 s'étend sous le pavillon 2.

La référence 22 désigne la garniture qui recouvre le dessous de la console 9 et du pavillon 2.

La référence 23 désigne la sphère représentée en pointillés qui symbolise la tête d'un occupant située à la hauteur maximale.

Cette position détermine la limite arrière de la console 9.

La console 9 intègre un certain nombre de fonctions classiques.

Elle intègre en outre un écran 20 de vision des témoins de bouclage des ceintures de sécurité avant et arrière visible par tous les occupants du véhicule (voir la ligne de vision 24).

## Revendications

1. Traverse avant (1) de la caisse d'un véhicule automobile destinée à supporter l'avant du pavillon (2) du véhicule et dont la face intérieure (3) comporte des moyens de fixation pour fixer sous cette face (3) une console (9) contenant des composants électriques, **caractérisée en ce que** l'un au moins des bords longitudinaux (10, 13) de la traverse (1) comporte une excroissance (11, 12) réalisée d'une seule pièce avec le reste de la traverse (1), cette excroissance (11, 12) comportant au moins une partie des moyens de fixation de la console (9).

2. Traverse avant selon la revendication 1, **caractérisée en ce que** ladite au moins une partie des moyens de fixation est constituée par au moins un trou de fixation (4, 6, 8) réalisé sur la face intérieure de ladite excroissance (11, 12).

3. Traverse avant selon l'une des revendications 1 ou 2, **caractérisée en ce que** ladite excroissance (11) est située sur le bord longitudinal avant (10) de la traverse (1).

4. Traverse avant selon l'une des revendications 1 à 3, **caractérisée en ce qu'**elle comporte une seconde excroissance (12) réalisée sur l'autre bord longitudinal (13) de la traverse.

5. Traverse avant selon la revendication 4, **caractérisée en ce que** la seconde excroissance (12) comporte sur sa face intérieure au moins un trou (4) pour fixer ladite console (9).

6. Traverse avant selon l'une des revendications 4 ou 5, **caractérisée en ce que** les deux excroissances (11, 12) sont situées sensiblement au milieu de la traverse.

7. Traverse avant selon l'une des revendications 4 à 6, **caractérisée en ce que** la face intérieure (11 a, 12a) des deux excroissances (11, 12) est située dans le prolongement de la face intérieure (3) du reste de la traverse.

8. Traverse avant selon l'une des revendications 1 à 7, **caractérisée en ce que** chacun des deux bords longitudinaux (10, 13) de la traverse porte un rebord (14, 15) plié sensiblement perpendiculaire à la face intérieure (3) de la traverse, ce rebord (14, 15) comportant lui-même une bordure (16, 17) pliée vers l'extérieur destinée à être fixée au pavillon (2), ce rebord (14, 15) et cette bordure (16, 17) s'étendant sans discontinuité sur le bord extérieur de chacune des excroissances (11, 12).

9. Traverse avant selon la revendication 8, **caractérisée en ce qu'**elle comprend au moins un bossage (19) situé dans la zone de l'excroissance (11) réalisée sur le bord longitudinal avant (10) de la traverse, le sommet de ce bossage (19) étant situé dans le prolongement de ladite bordure pliée (16, 17).

10. Véhicule automobile dont la caisse comporte une traverse avant selon l'une des revendications 1 à 9, une console (9) contenant des composants électriques étant fixée sous cette traverse avant au moins partiellement à l'excroissance (11) réalisée sur l'un (10) des bords longitudinaux de la traverse.

## Patentansprüche

1. Vordere Querstrebe (1) der Karosserie eines Kraftfahrzeugs, die dazu bestimmt ist, den Vorderteil des Himmels (2) des Fahrzeugs zu tragen und von der eine Innenseite (3) Befestigungsmittel aufweist, um unter dieser Seite (3) eine Konsole (9) zu befestigen, die elektrische Bauteile enthält, **dadurch gekennzeichnet, dass** mindestens einer der Längsränder (10, 13) der Querstrebe (1) eine Ausstülpung (11, 12) aufweist, die aus einem Stück mit dem Rest der Querstrebe (1) hergestellt ist, wobei diese Ausstülpung (11, 12) mindestens einen Teil der Befestigungsmittel der Konsole (9) aufweist.

2. Vordere Querstrebe nach Anspruch 1, **dadurch gekennzeichnet, dass** der mindestens eine Teil der Befestigungsmittel aus mindestens einer Befestigungsbohrung (4, 6, 8) besteht, die auf der Innenseite der Ausstülpung (11, 12) hergestellt ist.

3. Vordere Querstrebe nach einem der Ansprüche 1 oder 2, **dadurch gekennzeichnet, dass** die Ausstülpung (11) auf dem vorderen Längsrand (10) der Querstrebe (1) liegt.

4. Vordere Querstrebe nach einem der Ansprüche 1 bis 3, **dadurch gekennzeichnet, dass** sie eine zweite Ausstülpung (12) aufweist, die auf dem anderen Längsrand (13) der Querstrebe hergestellt ist.

5. Vordere Querstrebe nach Anspruch 4, **dadurch gekennzeichnet, dass** die zweite Ausstülpung (12) auf ihrer Innenseite mindestens eine Bohrung (4) zum Befestigen der Konsole (9) aufweist.

6. Vordere Querstrebe nach einem der Ansprüche 4 oder 5, **dadurch gekennzeichnet, dass** die zwei Ausstülpungen (11, 12) im Wesentlichen in der Mitte der Querstrebe liegen.

7. Vordere Querstrebe nach einem der Ansprüche 4 bis 6, **dadurch gekennzeichnet, dass** die Innenseite (11a, 12a) der zwei Ausstülpungen (11, 12) in der Verlängerung der Innenseite (3) des Rests der Querstrebe liegt.

8. Vordere Querstrebe nach einem der Ansprüche 1 bis 7, **dadurch gekennzeichnet, dass** jeder der zwei Längsränder (10, 13) der Querstrebe eine Randleiste (14, 15) aufweist, die im Wesentlichen senkrecht zu der Innenseite (3) der Querstrebe gefaltet ist, wobei diese Randleiste (14, 15) selbst einen Rand (16, 17) aufweist, der zur Außenseite gefaltet ist, der dazu bestimmt ist, an dem Himmel (2) befestigt zu werden, wobei sich diese Randleiste (14, 15) und dieser Rand (16, 17) ununterbrochen auf dem Außenrand jeder der Ausstülpungen (11, 12) erstrecken.

9. Vordere Querstrebe nach Anspruch 8, **dadurch gekennzeichnet, dass** sie mindestens einen Höcker (19) aufweist, der in dem Bereich der Ausstülpung (11), die auf dem vorderen Längsrand (10) der Querstrebe hergestellt ist, liegt, wobei der Scheitel dieses Höckers (19) in der Verlängerung des gefalteten Rands (16, 17) liegt.

10. Kraftfahrzeug, dessen Karosserie eine Querstrebe nach einem der Ansprüche 1 bis 9 aufweist, wobei eine Konsole (9), die elektrische Bauteile enthält, unter dieser vorderen Querstrebe mindestens teilweise an der Ausstülpung (11), die auf einem (10) der Längsränder der Querstrebe hergestellt ist, befestigt ist.

## Claims

1. A front crossmember (1) of the body of a motor vehicle, intended to support the front of the roof (2) of the vehicle, and the interior face (3) of which comprises attachment means for attaching beneath this face (3) a console (9) containing electrical components, **characterized in that** at least one of the longitudinal edges (10, 13) of the crossmember (1) comprises an excrescence (11, 12) made of a single piece with the rest of the crossmember (1), this excrescence (11, 12) comprising at least a portion of the attachment means of the console (9).

2. The front crossmember according to Claim 1, **characterized in that** the said at least one portion of the attachment means is constituted by at least one attachment hole (4, 6, 8) formed on the interior face of the said excrescence (11, 12).

3. The front crossmember according to one of Claims 1 or 2, **characterized in that** the said excrescence (11) is situated on the front longitudinal edge (10) of the crossmember (1).

4. The front crossmember according to one of Claims 1 to 3, **characterized in that** it comprises a second excrescence (12) made on the other longitudinal edge (13) of the crossmember.

5. The front crossmember according to Claim 4, **characterized in that** the second excrescence (12) comprises on its interior face at least one hole (4) for attaching the said console (9).

6. The front crossmember according to one of Claims 4 or 5, **characterized in that** the two excrescences (11, 12) are situated substantially in the middle of the crossmember.

7. The front crossmember according to one of Claims 4 to 6, **characterized in that** the interior face (11a, 12a) of the two excrescences (11, 12) is situated in the extension of the interior face (3) of the rest of the crossmember.

8. The front crossmember according to one of Claims 1 to 7, **characterized in that** each of the two longitudinal edges (10, 13) of the crossmember carries a rim (14, 15) folded substantially perpendicular to the interior face (3) of the crossmember, this rim (14, 15) itself comprising a border (16, 17) folded towards the exterior, intended to be attached to the roof (2), this rim (14, 15) and this border (16, 17) extending without discontinuity on the exterior edge of each of the excrescences (11, 12).

9. The front crossmember according to Claim 8, **characterized in that** it includes at least one boss (19) situated in the area of the excrescence (11) made on the longitudinal front edge (10) of the crossmember, the apex of this boss (19) being situated in the extension of the said folded border (16, 17).

10. A motor vehicle, the body of which comprises a front crossmember according to one of Claims 1 to 9, a console (9) containing electrical components being attached beneath this front crossmember at least partially to the excrescence (11) formed on one (10) of the longitudinal edges of the crossmember.
